Europäisches Patentamt

European Patent Office

Office européen des brevets

(19)

(11) Veröffentlichungsnummer: **0 048 213**
**B1**

(12) **EUROPÄISCHE PATENTSCHRIFT**

(45) Veröffentlichungstag der Patentschrift:
06.02.85

(51) Int. Cl.⁴: **H 02 K 5/18**

(21) Anmeldenummer: 81710043.1

(22) Anmeldetag: 10.09.81

(54) Motorengehäuse in Form eines rohrartigen Mantels.

(30) Priorität: 11.09.80 DE 8024246 U

(43) Veröffentlichungstag der Anmeldung:
24.03.82 Patentblatt 82/12

(45) Bekanntmachung des Hinweises auf die Patenterteilung:
06.02.85 Patentblatt 85/6

(84) Benannte Vertragsstaaten:
AT CH DE LI

(56) Entgegenhaltungen:
CH - A - 289 502
DE - A - 1 488 657
DE - A - 1 613 042
DE - A - 2 233 860
DE - B - 1 276 801
DE - C - 457 156
FR - A - 2 135 467
FR - A - 2 297 512
GB - A - 624 256
US - A - 2 593 857
US - A - 4 103 192

(73) Patentinhaber: SCHWEIZERISCHE ALUMINIUM AG,
CH-3965 Chippis (CH)

(72) Erfinder: Bock, Uwe, Richard-Wagner-Strasse 51,
D-7700 Singen (DE)

(74) Vertreter: Hiebsch, Gerhard F., Dipl.-Ing.,
Erzbergerstrasse 5A Postfach 464, D-7700 Singen 1 (DE)

## Beschreibung

Die Erfindung betrifft ein Motorengehäuse in Form eines einen Stator umgebenden rohrartigen und querschnittlich aus wenigstens zwei Schalenteilen zusammengesetzten Mantels, von dessen Aussenseite Radialrippen abragen, wobei die einander benachbarten Kanten der Schalenteile sowie diese am Stator durch Verbindungselemente gehalten sind.

Bekannte Motorengehäuse bestehen aus geschlossenen Rippenrohren, von deren Aussenseite unterschiedlich angeordnete Klemmbrettsockel und/oder Füsse abragen. Für die Fertigung dieser Rippenrohre sind mehrere verschiedenartige Werkzeuge erforderlich, um Rippenrohre mit oder ohne Fuss, mit seitlichem oder im Gehäusescheitel angeordnetem Klemmbrettsockel herzustellen.

Ein Motorengehäuse der eingangs erwähnten Art mit einer seitlichen Nut/Feder-Verbindung ist der FR-A 2 135 467 zu entnehmen; jene Nut/Feder-Verbindung kann nur unter Hinzuziehung von Schrauben wirksam werden und ist ohne diese Spannmittel nicht in der Lage die Schalenteile zusammenzuhalten.

Die FR-A 2 297 512 legt es nahe, die in Abstand zueinander unmittelbar auf einer Zylinderfläche verlaufenden Schalenteile durch aufgesetzte Klammern aneinanderzufügen; es entstehen so in der nicht sehr stabil festliegenden Mantelfläche Unterbrechungen, welche das Kühlverhalten beeinflussen.

Angesichts dieser Gegebenheiten hat sich der Erfinder das Ziel gesetzt, eine Verbesserung der Kühlleistung im Zusammenhang mit einer vereinfachten Herstellung eines günstig festlegbaren Mantels zu ermöglichen.

Zur Lösung dieser Aufgabe führt, dass wenigstens eine Kante des Schalenteils querschnittlich hakenartig mit von der Mantelachse weg weisender Nasenleiste ausgebildet und diese in eine Rinne des benachbarten Schalenteils eingesetzt ist, wobei den Radialrippen an der Mantelinnenseite Radialstege zugeordnet sind, die sich gegen den Stator abstützen. Diese Nasenleiste des einen Schalenteils wird in die Rinne des benachbarten Schalenteiles eingeführt und bevorzugt zwischen diese beiden Elemente der Klemmverbindung ein hitzebeständiges Dichtungsmittel eingebracht.

Die so ausgebildete Verbindung ist der Nut/Feder-Verbindung nach der FR-A 2 135 467 weit überlegen; der mehrschalige Mantel hält nun durch die besondere Ausführung der Verbindungselemente im Zusammenhang mit dem Verspannen am Stator, der seinerseits durch die Radialstege in kühlendem Abstand gehalten wird. Radialstege an der Innenseite eines Gehäuses, welches zwischen den Radialstegen mit einem Ständerblechpaket Kühlkanäle begrenzt sind der DE-A 1 488 657 an sich zu entnehmen. Die erfindungsgemässen Radialstege übernehmen demgegenüber zusätzlich eine Spannfunktion.

Bei einer Ausführungsform der Erfindung liegen die inneren Radialstege auf den Radien, welche die Achsen für die äusseren Radialrippen bilden. Letztere können im übrigen einen T-förmigen Querschnitt aufweisen, wobei zwischen zwei Profilstegen dieser Radialrippen jeweils eine Radialrippe geringerer Höhe vorgesehen ist.

Die Radialrippen geringer Höhe bilden Wärmebrücken zum Stator und dienen vor allem dem Zweck, durch eine geringere Wanddicke und damit verminderte Ringspannung sowie durch ein reduziertes Biegemoment die Biegspannung in dem Nut-Federelement zu verkleinern.

Jene T-förmigen Kühlrippen bilden zusammen mit der äusseren Gehäusefläche Strömungskanäle für die Kühlluft, welche dank der Querstege der Kühlrippen an einem radialen Abströmen gehindert wird. Zwar zeigt bereits die DE-B 1 276 801 T-förmige Stege, die jedoch nicht die erfindungsgemässe Konfiguration von aussenliegenden Kühlkanälen nahelegen.

In der Regel werden mit Kühlrippen versehene Oberflächen gekühlte Motoren mittels stirnseitig angebrachtem Lüfterrad zwangsbelüftet. Die durch die Lüfterhaube mehr oder weniger gerichtete Kühlluft streicht dabei in Längsrichtung über den gerippten Mantel. Besonders durch die quergerichtete natürliche Auftriebskomponente ist es im allgemeinen nicht zu vermeiden, dass die Kühlluft radial wegströmt. Dies lässt die Luftgeschwindigkeit auf der dem Lüfterrad abgewandten Mantelseite mit zunehmender Gehäuselänge besonders in der für den Wärmeübergang entscheidenden Zone zwischen den Kühlrippen auf ein Minimum absinken. Um diesen Effekt nun zu vermindern und die Wärmeabgabe wesentlich zu verbessern, werden jene T-förmige Kühlrippen verwendet, zwischen denen die Kühlluft teilweise zwangsgerichtet wird. Ausser der bereits beschriebenen Sperre gegen radiales Abströmen der Kühlluft wird eine erhöhte Luftgeschwindigkeit im unmittelbaren Bereich der Oberfläche auch auf der dem Lüfter abgewandten Seite erreicht.

Bei einer weiteren Ausführungsform der Erfindung kann zwischen zwei T-förmigen Kühlrippen jeweils zumindest eine Flachrippe geringer Höhe angeordnet werden. Die Verwendung T-förmigen Kühlrippen kann auf einen Teil des Mantelumfanges beschränkt sein, bevorzugt auf die den Füssen abgewandte Manteloberfläche.

Als ein Vorteil dieser Rippenform ist noch anzusehen, dass bei stranggepressten Motorengehäusen die sich stirnseitig ergebenden scharfen Rippenspitzen bisheriger Form entfallen, die bekanntlich gebrochen – also nachgearbeitet – werden müssen, um Verletzungsgefahren hintanzuhalten.

Insbesondere bei Aufteilung des ringartigen Mantelquerschnittes in zwei Hälften – also bei Verwendung zweier Halbschalen – bedarf es lediglich eines einzigen Werkzeuges, da die Halbschalen von Abschnitten eines einzigen Strangpressprofiles gebildet werden können. So liegt es im Rahmen einer Ausführungsform, dass in zusammengebauter Lage zweier aus Abschnitten eines Strangpressprofils gebildeter Halbschalen oder Schalenteile die Nasenleiste von einer Anformung an die Rinne hintergriffen ist und/oder der freie Rand der Rinne des einen Schalenteils zwischen der Nasenleiste und einer Anformung des anderen Schalenteiles festliegt.

Das erfindungsgemässe Motorengehäuse ist mit geringem Werkzeugeinsatz herzustellen, in seiner Ausgestaltung sehr variabel. Im Gegensatz zu einem geschlossenen Mantel aus einem Strangpressprofil fehlen jegliche Pressschweissnähte.

Weitere Vorteile und Einzelheiten der Erfindung ergeben sich aus der nachfolgenden Beschreibung bevorzugter Ausführungsbeispiele sowie anhand der Zeichnung; diese zeigt jeweils im Querschnitt in

Fig. 1 den von einem Mantel umgebenen Stator eines Motors;

Fig. 2 eine andere Ausführungsform des Mantels in auseinander genommenem Zustand;

Fig. 3 ein weiteres Ausführungsbeispiel des Mantels;

Fig. 4 ein geändertes Detail aus Fig. 3.

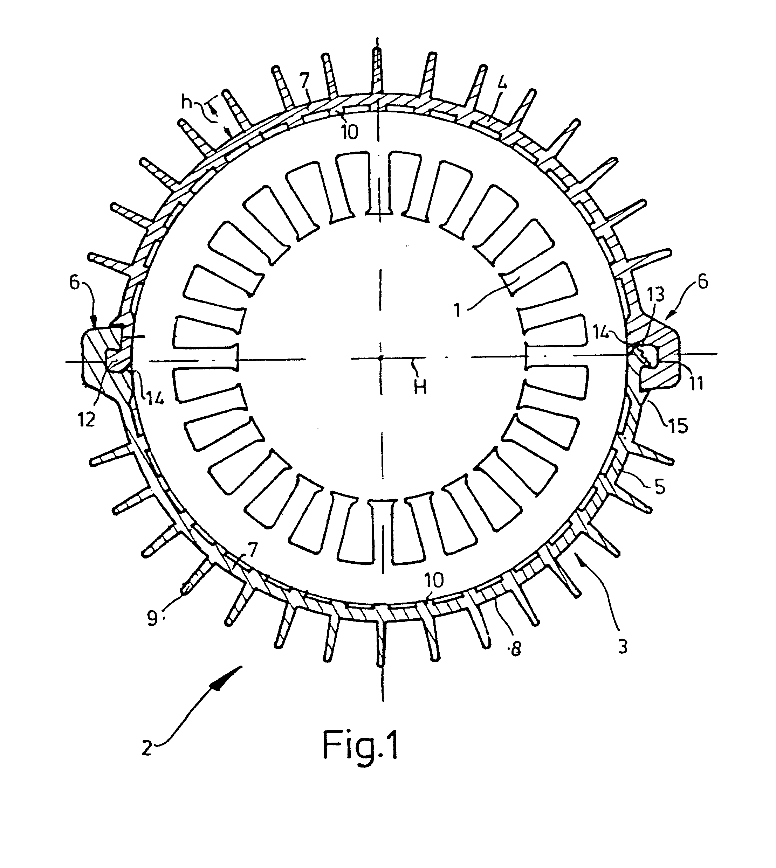

Gemäss Fig. 1 ist der Stator 1 eines nur teilweise wiedergegebenen Motors 2 von einem Mantel 3 aus zwei Halbschalen 4, 5 umgeben; letztere sind in der in Fig. 1 mit H bezeichneten Statorquerachse beidseits durch Klemmorgane 6 miteinander verbunden.

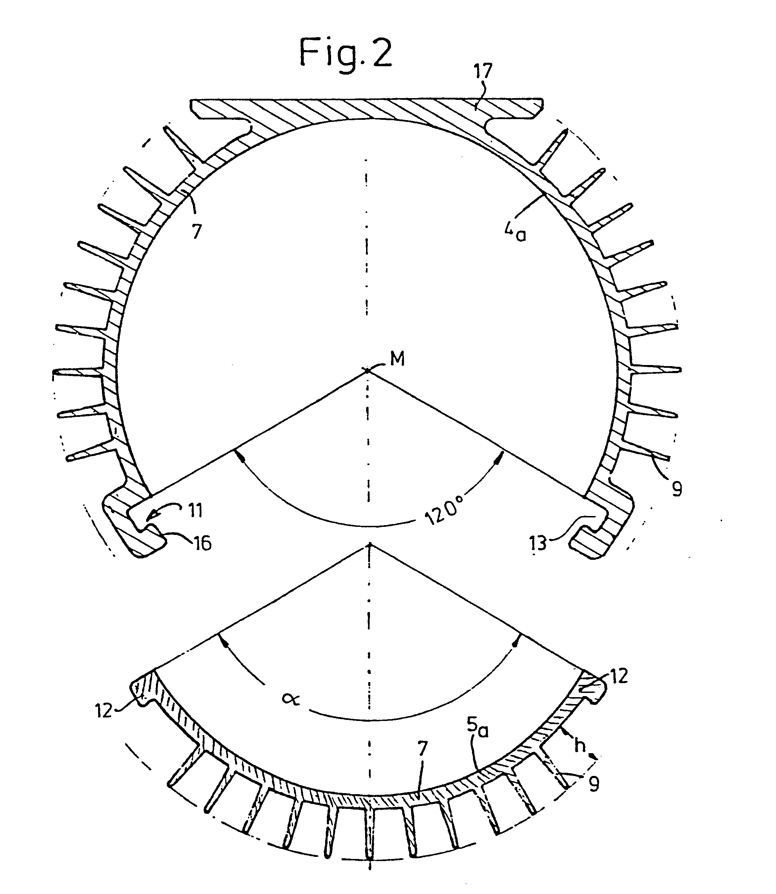

Jede der Halbschalen 4 bzw. 5 besteht aus dem querschnittlich halbringförmigen Schalenkörper 7 und an dessen Aussenseite 8 angeformten Radialrippen 9 der Länge h sowie inneren Radialstegen 10 geringer Höhe, wobei in den Fig. 2-4 die Radialstege 10 geringer Höhe nicht dargestellt sind. Die eine Schalenlängskante jeder Halbschale 4, 5 ist als nach innen offene Rinne 11 ausgebildet, in welche – bei zusammengesetztem Mantel 3 – eine hakenartig nach aussen weisende Nasenleiste 12 der anschliessenden Halbschale 5 bzw. 4 eingreift. Beide Halbschalen 4, 5 sind von einem einzigen Strangpressprofil abgelängt. Die Rinne 11 der einen Halbschale 4 bzw. 5 bildet mit der Nasenleiste 12 der anderen Halbschale 5 bzw. 4 jene als Nut und Feder ineinander greifenden Klemmorgane 6, wobei die Nasenleiste 12 von einer über die Rinnennut 13 ragenden Schrägfläche 14 in der Rinnennut 13 gesichert ist. Ebenfalls liegt der Nasenleiste 12 an ihrer Halbschale 4, 5 eine Anformung 15 gegenüber, gegen die sich der freie Rand 16 der Rinne 11 stützt.

Bei der Ausführungsform nach Fig. 2 ist der Mantel 3 im Verhältnis 1 : 2 in Schalen 4a und 5a geteilt (siehe Teilungswinkel $\alpha$ an der Mantellängsachse M).

Im Scheitel des Mantels 3 ist hier zudem ein Klemmbrettsockel 17 zur nicht weiter wiedergegebenen Festlegung des Mantels 3 erkennbar.

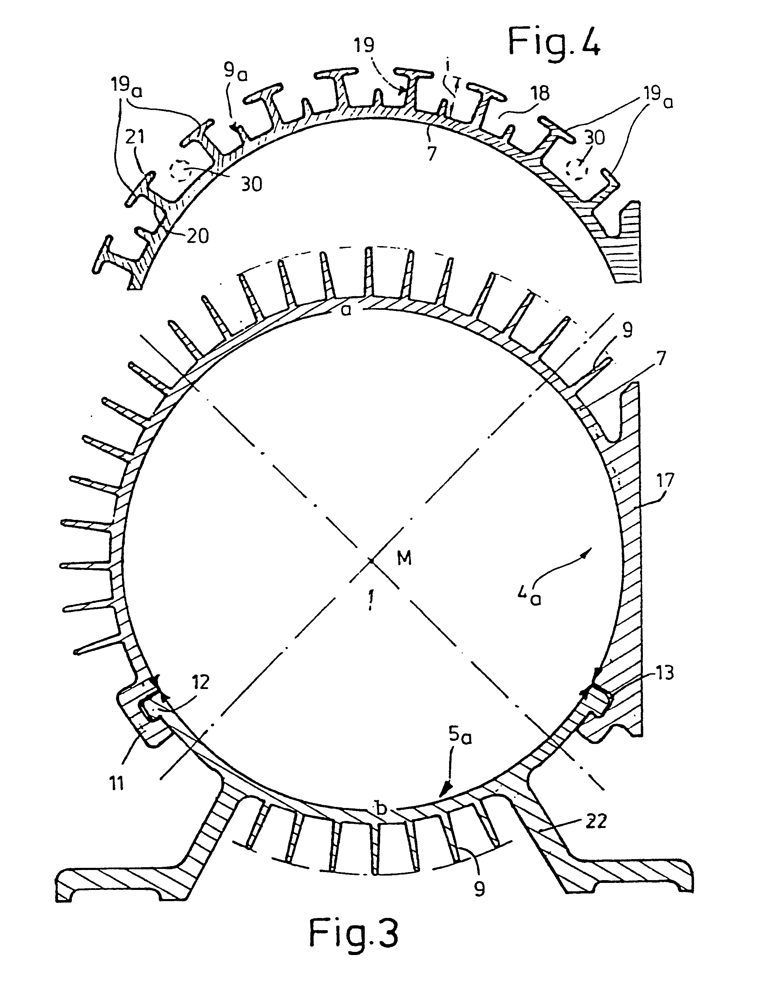

Auch die Ausführungsform nach Fig. 3 weist Schalen 4a, 5a unterschiedlicher Bogenlängen a, b auf. Die grössere Schale 4a ist seitlich mit jenem Klemmsockel 17 versehen, an die kleinere Schale 5a sind Füsse 22 L-förmigen Querschnittes angeformt.

Die Radialrippen 9a in Fig. 4 sind verhältnismässig kurz und flankierten T-förmige Kühlrippen 19 aus Steg 20 und Quersteg 21 einer Höhe i. Zwischen den T-Rippen 19a in Fig. 4 ist auf die kurzen Radialrippen 9a verzichtet worden, um die Achslage von – bei 30 angedeuteten – Durchgangsbolzen zur Lagerschildbefestigung nicht zu behindern.

Die T-Rippen 19 bilden C-förmige Luftkanäle 18, in denen die Kühlluft teilweise zwangsgeführt ist. Ein radiales Wegströmen wird wesentlich eingeschränkt und eine erhöhte Luftgeschwindigkeit im unmittelbaren Bereich der Manteloberfläche erreicht. In jene C-förmigen Kanäle 18 können die kurzen Radialrippen 9a einragen, wie dies bereits beschrieben ist.

Die T-förmigen Kühlrippen 19 sind bei Ausführungsformen nach Fig. 3 vor allem an die grössere Schale 4a angeformt.

## Patentansprüche

1. Motorengehäuse in Form eines einen Stator (1) umgebenden rohrartigen und querschnittlich aus wenigstens zwei Schalenteilen (4, 5) zusammengesetzten Mantels (3), von dessen Aussenseite (8) Radialrippen (9, 19) abragen, wobei die einander benachbarten Kanten der Schalenteile sowie diese am Stator durch Verbindungselemente (6) gehalten sind, dadurch gekennzeichnet, dass wenigstens eine Kante des Schalenteils (4 oder 5) querschnittlich hakenartig mit von der Mantelachse (M) weg weisender Nasenleiste (12) ausgebildet und diese in eine Rinne (11) des benachbarten Schalenteils (5 oder 4) eingesetzt ist, wobei den Radialrippen (9, 19) an der Mantelinnenseite Radialstege (10) zugeordnet sind, die sich gegen den Stator abstützen.

2. Motorengehäuse nach Anspruch 1, dadurch gekennzeichnet, dass die inneren Radialstege (10) auf den Radien liegen, welche die Achsen für die äusseren Radialrippen (9, 19) bilden.

3. Motorengehäuse nach Anspruch 1 oder 2, dadurch gekennzeichnet, dass die Radialrippen (19) einen an sich bekannten T-förmigen Querschnitt aufweisen, und zwischen zwei Profilstegen (20) dieser Radialrippen jeweils eine Radialrippe (9a) geringerer Höhe vorgesehen ist.

4. Motorengehäuse nach Anspruch 1, dadurch gekennzeichnet, dass in zusammengebauter Lage zweier gegebenenfalls aus Abschnitten eines Strangpressprofils gebildeter Halbschalen oder Schalenteile (4 und 5) die Nasenleiste (12) von einer Anformung (14) an die Rinne (11) hintergriffen ist und/oder der freie Rand (16) der Rinne des einen Schalenteils (4 bzw. 5) zwischen der Nasenleiste (12) und einer Anformung (15) des anderen Schalenteiles (5 bzw. 4) festliegt.

5. Motorengehäuse nach Anspruch 1, dadurch gekennzeichnet, dass der Querschnitt des Mantels (3) im Verhältnis 1 : 2 geteilt ist, wobei die den

kleineren Schalenteil (5$_a$) begrenzenden Radien einen Winkel von etwa 120° einschliessen.

## Claims

1. Motor housing in the form of a tubular jacket (3) assembled in cross-section from at least two shell parts (4, 5), surrounding a stator (1), from the exterior (8) of which jacket radial fins (9, 19) protrude, while the mutually adjacent edges of the shell parts and these are held on the stator by connection elements (6), characterised in that at least one edge of the shell part (4 or 5) is formed in cross-section in hook manner with nose strip (12) pointing away from the jacket axis (M) and this nose strip is inserted into a channel (11) of the adjacent shell part (5 or 4), while on the inner side of the jacket radial webs (10) bearing against the stator are associated with the radial fins (9, 19).

2. Motor housing according to Claim 1, characterised in that the inner radial webs (10) lie on the radii which form the axes for the outer radial fins (9, 19).

3. Motor housing according to Claim 1 or 2, characterised in that the radial fins (19) have a T-shaped cross-section known per se and a radial fin (9a) of less height is provided between each two profile webs (20) of these radial fins.

4. Motor housing according to Claim 1, characterised in that when two half shells or shell parts (4 and 5), which may be formed by parts of an extruded section, are in the assembled position a portion (14) formed on to the channel (11) grasps behind the nose strip (12) and/or the free edge (16) of the channel of the one shell part (4 or 5) is fast between the nose strip (12) and a formed-on portion (15) of the other shell part (5 or 4).

5. Motor housing according to Claim 1, characterised in that the cross-section of the jacket (3) is divided in the ratio 1 : 2, and the radii which define the smaller shell part (5$_a$) include an angle of about 120°.

## Revendications

1. Boîtier de moteur en forme d'enveloppe (3) de forme tubulaire entourant un stator (1) et constituée en coupe d'au moins deux parties de coquille (4, 5), enveloppe de la face extérieure de laquelle font saillie des nervures radiales (9, 19), étant précisé que les arêtes, voisines l'une de l'autre, des parties de coquille sont maintenues par des éléments de liaison (6) ainsi que ces parties de coquille le sont contre le stator, caractérisé en ce qu'au moins une arête de la partie de coquille (4 ou 5) a en coupe la forme d'un crochet avec un talon (12) dirigé en direction opposée à l'axe de l'enveloppe (M) et en ce que ce talon est introduit dans une rainure (11) de la partie de coquille voisine (5 ou 4), étant précisé qu'aux nervures radiales (9, 19) correspondent, sur la face interne de l'enveloppe, des nervures radiales (10) qui s'appuient contre le stator.

2. Boîtier de moteur selon la revendication 1, caractérisé en ce que les nervures radiales internes (10) sont situées sur le rayon qui forment les axes des nervures radiales externes (9, 19).

3. Boîtier de moteur selon la revendication 1 ou 2, caractérisé en ce que les nervures radiales (19) présentent une section en forme de T, connue en soi; et en ce qu'entre deux âmes (20) de ces nervures radiales est chaque fois prévue une nervure radiale (9a) de moindre hauteur.

4. Boîtier de moteur selon la revendication 1, caractérisé en ce qu'en l'état monté de deux demi-coquilles ou parties de coquilles (4 et 5), éventuellement formées de tronçons d'un profilé obtenu à la presse à extrusion, le talon (12) est repris par derrière par un bossage (14) de la rainure (11) et/ou en ce que le bord libre (16) de la rainure de l'une des parties de coquille (4 ou 5) est fixé entre le talon (12) et un bossage (15) de l'autre partie de coquille (5 ou 4).

5. Boîtier de moteur selon la revendication 1, caractérisé en ce que la section de l'enveloppe (3) est partagée dans le rapport 1 : 2, étant précisé que les rayons qui limitent la plus petite partie de coquille (5a) font entre eux un angle d'environ 120°.

Fig.1

# Fig. 2

Fig.4

Fig.3